# EUROPÄISCHE PATENTANMELDUNG

(11) **EP 1 739 507 A1**
(43) Veröffentlichungstag der Anmeldung: **03.01.2007**
(21) Anmeldenummer: 06012889.9
(22) Anmeldetag: 22.06.2006
(51) Int. Cl.: G03H 1/20, G03H 1/24

(54) **Vorrichtung zur Herstellung eines Reflektionshologramms**

(30) Priorität: 27.06.2005 DE 102005029853
(71) Anmelder: prüfbau Dr.-Ing. H. Dürner GmbH, 82380 Peissenberg (DE)
(72) Erfinder: Hochenbleicher, Gerhard, 82256 Fürstenfeldbruck (DE); Bauernschmid, Peter, 82380 Peissenberg (DE)
(74) Vertreter: Weber, Joachim

(57) **Zusammenfassung**

Die Erfindung bezieht sich auf eine Vorrichtung zur Herstellung eines Reflektionshologramms mit einem Masterhologramm 1, welches zumindest eine farbsensitive, reflektierende Schicht umfasst, mit einem auf das Masterhologramm aufgebrachten photosensitiven Film 2 sowie mit einem auf dem Film angeordneten Filter 3, durch welchen Licht auf das Masterhologramm 1 geleitet und zu dem Film 2 reflektiert wird, sowie mit einer Laserlichtquelle 4, welche weißes oder monochromatisches Licht abgibt.

## Beschreibung

Die Erfindung bezieht sich auf eine Vorrichtung zur Herstellung eines Reflektionshologramms.

Im Einzelnen bezieht sich die Erfindung auf eine Vorrichtung, mit Hilfe derer Reflektionshologramme einfach und kostengünstig in großer Zahl individualisiert herstellbar sind.

Bei der Erzeugung von Reflektionsdiagrammen für sicherheitsrelevante Anwendungen, beispielsweise fälschungssichere Ausweise, Kreditkarten oder ähnliches ist es wünschenswert, ein individualisiertes Reflektionshologramm zu erzielen, bei welchem beispielsweise ein Photo des Karteninhabers oder des Ausweisinhabers in dem Reflektionshologramm enthalten ist. Dies kann zusätzlich zu weiteren Sicherheitsmerkmalen der Fall sein, beispielsweise Wappen, Muster oder Ähnlichem.

Die aus dem Stand der Technik bekannten Vorrichtungen erfordern entweder einen hohen gerätetechnischen Aufwand oder sind für eine Individualisierung des Reflektionshologramms nicht geeignet.

Practical Holography, eds. Saxby, Grahm, 1988, Seite 122 beschreibt ein übliches Kontaktkopieverfahren, bei welchem weißes Licht verwendet wird. Weiterhin wird ein sehr schmalbandiges Filter verwendet. Farbige Kopien sind somit nicht erzeugbar.

Die US 3,647,289 beschreibt ein Verfahren und eine Vorrichtung zum Kopieren von Hologrammen, bei welchen eine Intensitätskontrolle bei der Erstellung einer Kontaktkopie durchgeführt wird, um die Intensität des Objektlichts und des Referenzstrahls aneinander anzupassen.

Aus der US 2004/0175627 A1 ist es bekannt, die höheren Ordnungen des Gitters bei Transmissionshologrammen zu eleminieren.

Der Erfindung liegt die Aufgabe zugrunde, eine Vorrichtung der eingangs genannten Art zu schaffen, welche bei einfachem Aufbau und einfacher, kostengünstiger Anwendbarkeit die individuelle Erstellung von insbesondere farbigen Reflektionshologrammen ermöglicht.

Erfindungsgemäß wird die Aufgabe durch die Merkmalskombination des Hauptanspruchs gelöst, die Unteransprüche zeigen weitere vorteilhafte Ausgestaltungen der Erfindung.

Erfindungsgemäß ist somit vorgesehen, dass ein Masterhologramm bereitgestellt wird, auf welches ein zu belichtender Film aufgelegt ist, auf welchem sich wiederum ein Filter befindet. Die gesamte Anordnung wird durch das Filter und den Film hindurch mittels einer Laserlichtquelle mit Laser belichtet. Das Laserlicht wird dabei selektiv für die einzelnen Farbpixel durch das Filter gefiltert und entsprechend von dem Masterhologramm, welches die Wirkung eines Spiegels hat, für die einzelnen Farben reflektiert. Dieses reflektierte und in einzelne Farbpixel oder Farbpunkte zerlegte Licht belichtet dann den Film.

Es ist erfindungsgemäß somit auf besonders einfache Weise möglich, auf dem Film ein individualisiertes Reflektionshologramm zu erzeugen, welches insbesondere mehrfarbig sein kann und die Informationen wiedergibt, welche sich auf dem Filter befinden.

Erfindungsgemäß ist es somit möglich, das Filter mittels eines drucktechnischen Verfahrens herzustellen, beispielsweise mittels eines Tintenstrahldruckverfahrens. Diese mehrfarbige Abbildung, die als Informationsvorlage als Filter aufgebracht ist, wird somit pixelweise bei der Reflektion des Laserlichts durch das Masterhologramm auf den Film belichtet und dort fixiert. Es entsteht somit ein Reflektionshologramm, welches farbige Informationen wiedergeben kann. Die erfindungsgemäße Vorgehensweise ist dadurch besonders vorteilhaft, dass das Filter sehr einfach und kostengünstig herstellbar ist. So ist es beispielsweise für Ausweise möglich, ein Farbphoto einer Person mit einem handelsüblichen Tintenstrahldrucker farbig zu drucken und in ein Reflektionshologramm aufzunehmen.

Erfindungsgemäß ist es somit besonders vorteilhaft, dass unter Verwendung eines bedruckten Filmes, welche kostengünstig herstellbar ist, Hologrammkopien erstellbar sind. Zur farbgenauen Wiedergabe ist dabei keine weitere Justierung oder ähnliches erforderlich.

Als Laserlichtquelle wird bevorzugterweise ein Laserscanner verwendet. Die Laserlichtquelle wird erfindungsgemäß bevorzugterweise in Form eines weißen Laserstrahls gebildet, der aus mindestens den drei Farben (Rot, Gelb, Blau) besteht.

Der weiße Laserstrahl kann beispielsweise aus drei Einzellasern über dichroitische Spiegel erzeugt werden.

Alternativ hierzu ist es jedoch auch möglich, monochromatisches Laserlicht zu verwenden. Hierdurch ergibt sich eine Grundfärbung des Reflektionshologramms.

Das erfindungsgemäße Filter ist bevorzugterweise in Form eines transparenten, mit Informationen bedruckten Films ausgebildet. Es ist jedoch auch möglich, die Informationen auf andere Weise auf das Filter aufzubringen. Dabei können beispielsweise gelöste Farbstoffe oder Pigmente verwendet werden, welche mittels eines Druckverfahrens (additiv oder substraktiv) aufgebracht sind. Erfindungsgemäß ist es, wie beschrieben, möglich, das Filter mit mehrfarbigen Informationen zu versehen. Es ist im Rahmen der Erfindung jedoch auch möglich, das Filter monochromatisch auszugestalten. In einer Abwandlung der Erfindung könnte es auch möglich sein, das Filter selbst, zumindest zum Teil, als Hologramm auszubilden.

Bei der erfindungsgemäßen Vorrichtung kann bei der Belichtung durch die Laserlichtquelle auf eine Steuerung oder Synchronisierung des Laserstrahls verzichtet werden. Hierdurch ergibt sich eine einfache und kostengünstige Ausgestaltung der Vorrichtung und somit des zugrunde liegenden Verfahrens.

In einer günstigen Weiterbildung der Erfindung ist es möglich, das Filter mit dem zu belichtenden Film zu kombinieren und somit einstückig auszubilden. Es ist somit möglich, die Information des Filters direkt auf den Film aufzubringen, beispielsweise durch ein Druckverfahren.

Die Informationsschicht des erfindungsgemäßen Filters umfasst, wie ausgeführt, einzelne Pixel, beispielsweise in den Farben Rot, Grün und Blau. Die Pigmente der Pixel können absorbierend oder reflektierend ausgebildet sein.

Das erfindungsgemäß verwendete Masterhologramm ist bevorzugterweise mehrschichtig ausgebildet, so dass die einzelnen Schichten beispielsweise die einzelnen Farbanteile des durch das Filter zerlegten oder ausgefilterten Lichts der Laserlichtquelle selektiv reflektieren. Das Masterhologramm wirkt dabei wie ein Spiegel, der einzelne Farben (Laserfarbstrahlen) selektiv reflektiert. Diese Eigenschaft kann auch in einer einzigen Schicht des Masterhologramms, beispielsweise durch sequentielle oder parallele Belichtung mit den jeweiligen Farben (Laserstrahlung) realisiert werden. Dabei sind die Schichten des Masterhologramms auf die Wellenlängen der Laserlichtquelle abgestimmt, um diese entsprechend reflektieren zu können. Das Masterhologramm besteht erfindungsgemäß bevorzugt aus einem oder mehreren Reflektionshologrammen, welche unterschiedliche Eigenschaften aufweisen können, beispielsweise die Wirkung eines holographischen Spiegels oder einer holographischen Mattscheibe. Ebenso ist es möglich, Hologramme bzw. diffraktive optische Elemente (DOE) mit Oberflächenstrukturen als Muster einzusetzen.

Erfindungsgemäß befindet sich zwischen dem Masterhologramm und dem Filter der zu belichtende Film. Entsprechend der durch das Filter durchtretenden Strahlung wird die Information, welche von dem Masterhologramm reflektiert wird, pixelweise mit den zur Verfügung stehenden Laserwellenlängen auf den Film kopiert. Somit ist es erfindungsgemäß möglich, sämtliche Informationen, die sich auf dem Filter befinden, in den photoempfindlichen Film zu kopieren und somit die gewünschte farbige Informationsdarstellung zu erhalten.

In einer günstigen Weiterbildung der Erfindung ist vorgesehen, dass der zu belichtende Film vor der Belichtung mit einer weiteren Filterschicht versehen ist, um die zu belichtenden Informationen zu ändern. Dies kann von Bild zu Bild oder auch kontinuierlich erfolgen. Die Aufbringung der Filterschicht kann ebenfalls mittels eines drucktechnischen Verfahrens erfolgen. In einer Weiterbildung der Erfindung ist es möglich, das Masterhologramm mit feststehenden Informationen oder Merkmalen zu versehen, die zusätzlich bei der Reflektion des Laserlichts der Laserlichtquelle auf den Film belichtet werden können. Diese zusätzlichen Informationen des Masterhologramms können beispielsweise auch in einer farblichen Ausgestaltung, in einem Grundmuster oder in weiteren Bildelementen liegen. Dabei können die zusätzlichen Informationen beispielsweise beim Fügen der einzelnen Schichten des Masterhologramms eingebracht sein, beispielsweise durch Informationen, die der Klebeschicht auferlegt werden, beispielsweise durch Einbringen von Bereichen mit geändertem Brechungsindex oder durch Einbringung von Farbpigmenten oder Ähnlichem.

Der erfindungsgemäße Film ist bevorzugterweise ein Photopolymerfilm, der das gesamte Farbspektrum abdeckt. Ein derartiger Film wird beispielsweise von der Fa. DuPont unter der Bezeichnung "Omnidex" vertrieben. Bei der Belichtung erfolgt eine Polymerisation, welche eine dauerhafte Fixierung der eingebrachten Informationen sichert.

Die erfindungsgemäße Vorrichtung ermöglicht somit die Erstellung einer Kontaktkopie der auf dem Filter befindlichen Information auf den Film, wodurch sich ein hohes Maß an Informationssicherheit ergibt.

Im Folgenden wird die Erfindung anhand eines Ausführungsbeispiels in Verbindung mit der Zeichnung beschrieben. Dabei zeigt:

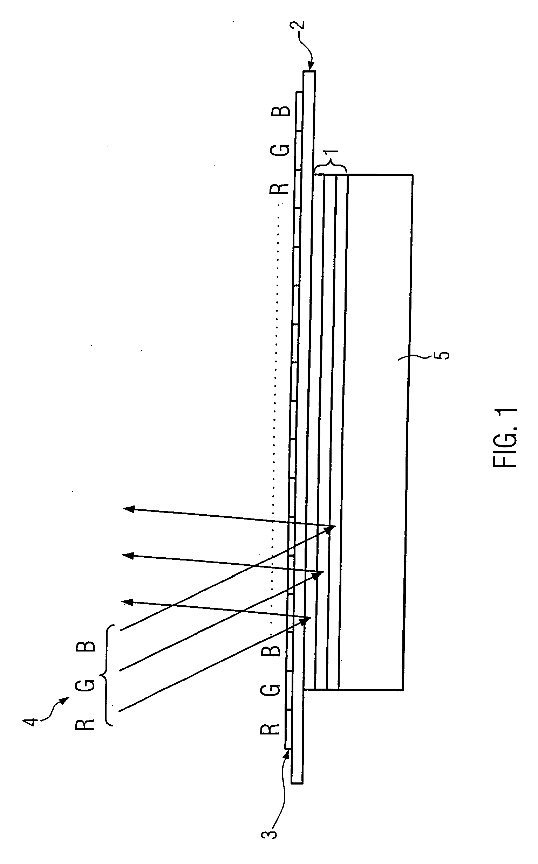

- Fig. 1: eine schematische Seitenansicht der wesentlichen Teile der erfindungsgemäßen Vorrichtung.

Diese umfasst ein Substrat 5, welches beispielsweise in Form einer Glasplatte ausgebildet sein kann. Auf dem Substrat 5 befinden sich drei Masterschichten eines Masterhologramms 1. Diese sind beispielsweise reflektierend für die Farben (Wellenlängen des eintretenden Laserlichts) Rot, Grün, Blau.

Auf dem Masterhologramm 1 ist ein zu belichtender Film 2 angeordnet, der als Photopolymerfilm ausgebildet ist. Auf dem Film 2 befindet sich ein Filter 3, welches mit Informationen versehen ist, die durch einzelne Farbpixel ausgebildet sind, beispielsweise mittels eines Tintenstrahldruckverfahrens. Die einzelnen Farbpixel sind bei der in Fig. 1 gewählten schematischen Darstellung in den Farben Rot, Grün und Blau wiedergegeben, wodurch sich beispielsweise eine farbige Abbildung auf dem Filter 3 wiedergeben lässt.

Wie in Fig. 1 gezeigt, erfolgt eine Beleuchtung mittels einer Laserlichtquelle 4, welche Laserlicht beispielsweise in den Farben Rot, Grün und Blau auf die gesamte Anordnung, beispielsweise mittels eines Scan-Verfahrens, aufbringt. Wie dargestellt, treten die einzelnen farbigen Laserstrahlen durch das Filter 3 und den Film 2 durch und werden von den zugeordneten Schichten des Masterhologramms 1 reflektiert. Durch dieses reflektierte Licht wird nachfolgend der Film 2 belichtet, um in diesem ein Reflektionshologramm zu erzeugen.

Die Erfindung ist nicht auf die beschriebene Vorrichtung beschränkt, vielmehr betrifft die Erfindung auch ein zugeordnetes Verfahren der Zuordnung und Belichtung der einzelnen Komponenten.

### Bezugszeichenliste

- 1: Masterhologramm
- 2: Film
- 3: Filter
- 4: Laserlichtquelle
- 5: Substrat

## Patentansprüche

1. Vorrichtung zur Herstellung eines Reflektionshologramms mit einem Masterhologramm (1), welches zumindest eine farbsensitive, reflektierende Schicht umfasst, mit einem auf das Masterhologramm aufgebrachten photosensitiven Film (2) sowie mit einem auf dem Film angeordneten Filter (3), durch welchen Licht auf das Masterhologramm (1) geleitet und zu dem Film (2) reflektiert wird, sowie mit einer Laserlichtquelle (4), welche weißes oder monochromatisches Licht abgibt, wobei das Filter (3) in Form eines transparenten, mit Informationen bedruckten Films ausgebildet ist.

2. Vorrichtung nach Anspruch 1, **dadurch gekennzeichnet, dass** die Laserlichtquelle (4) in Form eines Laserscanners ausgebildet ist.

3. Vorrichtung nach Anspruch 1 oder 2, **dadurch gekennzeichnet, dass** das Filter (3) mit farbigen Informationen versehen ist.

4. Vorrichtung nach einem der Ansprüche 1 bis 3, **dadurch gekennzeichnet, dass** das Filter (3) einstückig mit dem Film (2) ausgebildet ist.

5. Vorrichtung nach einem der Ansprüche 1 bis 4, **dadurch gekennzeichnet, dass** der Filter (3) pixelweise mit Informationen versehen ist, welche nur für ausgewählte Teile der Laserstrahlung der Laserlichtquelle (4) durchlässig sind.

6. Vorrichtung nach einem der Ansprüche 1 bis 5, **dadurch gekennzeichnet, dass** der Film (2) als Photopolymerfilm ausgebildet ist.

7. Vorrichtung nach einem der Ansprüche 1 bis 6, **dadurch gekennzeichnet, dass** das Masterhologramm (1) mehrschichtig ausgebildet ist.

8. Vorrichtung nach einem der Ansprüche 1 bis 7, **dadurch gekennzeichnet, dass** das Masterhologramm (1) reflektierend ausgebildet ist.

9. Vorrichtung nach einem der Ansprüche 1 bis 8, **dadurch gekennzeichnet, dass** das Masterhologramm (1) zumindest ein Reflektionshologramm umfasst.
